# EUROPÄISCHE PATENTSCHRIFT

(11) **EP 3 444 478 B1**
(45) Veröffentlichungstag und Bekanntmachung des Hinweises auf die Patenterteilung: **16.10.2024**
(21) Anmeldenummer: 17186876.3
(22) Anmeldetag: 18.08.2017
(51) Int. Cl.: F04D 19/04, F04D 29/058, F04D 29/059, F16C 32/04, F16C 25/08, F16C 27/04, F16C 27/06

(54) **VAKUUMPUMPE**
VACUUM PUMP
POMPE À VIDE

(43) Veröffentlichungstag der Anmeldung: 20.02.2019
(73) Patentinhaber: PFEIFFER VACUUM GMBH, 35614 Asslar (DE)
(72) Erfinder: STOLL, Tobias, 35644 Hohenahr (DE); JUNG, Jürgen, 35745 Herborn (DE)
(74) Vertreter: Manitz Finsterwald Patent- und Rechtsanwaltspartnerschaft mbB

(56) Entgegenhaltungen:
- EP-A2- 2 884 125
- WO-A1-2009/037255
- DE-A1- 102008 060 569
- DE-U1- 202016 000 085

## Beschreibung

Die vorliegende Erfindung betrifft eine Vakuumpumpe, insbesondere Turbomolekularpumpe, mit einem in einem Stator drehbar gelagerten Rotor für zumindest eine Pumpstufe.

Vakuumpumpen werden in unterschiedlichen technischen Gebieten, beispielsweise in der Halbleiterherstellung eingesetzt, um ein für einen jeweiligen Prozess erforderliches Vakuum zu schaffen. In vielen Fällen wird zur Schaffung des erforderlichen Vakuums eine hohe Pumpleistung benötigt, so dass die zumindest eine Pumpstufe - in der Regel sind es mehrere Stufen - mit sehr hohen Drehzahlen betrieben werden muss. Dies bedeutet, dass an die Lagerung der Welle des Rotors der Pumpstufe grundsätzlich hohe Anforderungen gestellt werden.

Bedingt durch den Aufbau einer hier in Rede stehenden Vakuumpumpe ergeben sich in deren Betrieb jedoch verschiedene Resonanzen. Maßgeblich für das Schwingungsverhalten sind unter anderem Eigenfrequenzen des Systems, die u. a. durch die Steifigkeit der Lagerung des Rotors und die Masse des schwingungsfähigen Systems beeinflusst werden. Beispielsweise beim Hochfahren einer Vakuumpumpe werden diese Frequenzen durchfahren und ggf. angeregt. Auch im Bereich der Enddrehzahl der Pumpe können Eigenfrequenzen angeregt werden. Hierbei können starke Schwingungen erzeugt werden, die sich nachteilig auf die Betriebssicherheit der Pumpe auswirken oder einen erhöhten Materialverschleiß der Pumpenkomponenten zur Folge haben. Zudem entstehen durch derartige Schwingungen starke Geräusche, die vom Bedienpersonal negativ wahrgenommen werden.

Die DE 20 2016 000 085 U1 offenbart eine Vakuumpumpe mit den Merkmalen des Oberbegriffs des Anspruchs 1 bzw. des Anspruchs 4. Weitere Beispiele ähnlicher Pumpen sind in den Druckschriften EP 2 884 125 A, WO 2009/037255 A und DE 10 2008 060 569 A angegeben.

Vor diesem Hintergrund liegt der Erfindung die Aufgabe zu Grunde, eine Vakuumpumpe anzugeben, die mit geringerem Schwingungsverhalten und damit erhöhter Betriebssicherheit, verringertem Komponentenverschleiß sowie niedrigerer Geräuschentwicklung betrieben werden kann. Diese Aufgabe ist mit einer Vakuumpumpe mit den Merkmalen des Anspruchs 1 oder 4 gelöst worden. Vorteilhafte Ausgestaltungen der Vakuumpumpe sind in den abhängigen Ansprüchen angegeben und werden nachfolgend erläutert.

Die erfindungsgemäße Vakuumpumpe, insbesondere eine Turbomolekularpumpe, weist einen Stator und einen drehbar in dem Stator gelagerten Rotor für zumindest eine Pumpstufe auf. Der Begriff "Stator" ist in diesem Zusammenhang breit zu verstehen. Er umfasst im weitesten Sinn alle Komponenten, die sich bei Betrieb der Pumpe nicht bewegen, insbesondere das Gehäuse der Pumpe und mit dem Gehäuse fest verbundene Bauteile.

Gemäß einem ersten Aspekt der Erfindung ist zur Lagerung des Rotors zumindest eine Lagereinheit vorgesehen, die ein Lager, insbesondere ein mechanisches oder permanentmagnetisches Lager, sowie zumindest einen dem Lager zugeordneten Aktor aufweist, der zur selektiven Veränderung zumindest einer Betriebseigenschaft und/oder -stellung des Lagers angeordnet ist.

Mechanische Lager bezeichnen hier solche Lager, die einen mechanischen Kontakt zwischen feststehenden und beweglichen, insbesondere rotierenden, Lagerkomponenten erfordern. Permanentmagnetische oder auch passivmagnetische Lager bezeichnen solche Lager, die ohne aktive Steuerung oder Regelung nur durch eine entsprechende Anordnung von permanentmagnetischen Materialien dauerhaft abstoßende oder anziehende Kräfte zwischen berührungslos angeordneten, feststehenden und beweglichen, insbesondere rotierenden Lagerkomponenten erzeugen.

Mit den Betriebseigenschaften des Lagers sollen hier Parameter verstanden werden, die Einfluss auf das Verhalten des Lagers im Betrieb haben können, insbesondere das Verhalten bei definierten Drehzahlen und/oder Drehzahlbereichen. Die Betriebsstellung des Lagers bezeichnet schließlich die Position, Orientierung und/oder Ausrichtung des Lagers oder Lagerkomponenten relativ zu weiteren Komponenten der Pumpe.

Durch den erfindungsgemäß vorgesehenen Aktor zur selektiven Veränderung zumindest einer Betriebseigenschaft und/oder -stellung des Lagers kann die Vakuumpumpe in vorteilhafter Weise für unterschiedliche Betriebsbedingungen angepasst werden. Eine solche Anpassung kann durch den Aktor mit nur geringem Aufwand erfolgen. Es besteht insbesondere die Möglichkeit, die Anpassung ohne Austausch von Komponenten oder manuellen Justierarbeiten vorzunehmen, was in besonders vorteilhafter Weise auch eine Anpassung während des Pumpenbetriebs ermöglicht.

Es kann beispielsweise während des Hochlaufens der Pumpe eine selektive Veränderung einer Betriebseigenschaft und/oder -stellung des Lagers im Hinblick auf etwaige Durchfahrten von Resonanzfrequenzbereichen des Rotors vorgenommen werden. Starke Schwingungserhöhungen und daraus resultierende Geräusche während des Pumpenhochlaufs können so vermieden oder zumindest reduziert werden. Hierdurch kann auch die Gefahr eines Notlagerkontakts verringert werden.

Ferner lässt sich durch den Aktor eine selektive Veränderung einer Betriebseigenschaft und/oder -stellung des Lagers im Hinblick auf die Enddrehzahl oder den Enddrehzahlbereich des Rotors vornehmen. Dies wird als sogenannter "Silentmode" bezeichnet, bei dem die Lagerparameter und/oder -stellung selektiv für möglichst geringe Vibrationen und Geräusche bei der Enddrehzahl im Normalbetrieb eingestellt werden. Hier ist ein möglichst hoher Isolationsgrad zwischen Rotor und Stator wünschenswert. Diese Forderung ist üblicherweise jedoch nur mit niedrigen Lagersteifigkeiten zu realisieren, was sich hinsichtlich Hochlaufverhalten und auch Robustheit der Pumpe nachteilig auswirkt. So wäre bei derartigen Lagerbedingen ein Hochlauf vom Stillstand bis zur Enddrehzahl nicht oder nur mit einem sehr ungünstigen Schwingungsverhalten möglich. Der erfindungsgemäße vorgesehene Aktor ermöglicht es jedoch, zumindest eine Betriebseigenschaft und/oder -stellung des Lagers nach erfolgtem Pumpenhochlauf und damit während des Betriebs selektiv im Hinblick auf den Endrehzahlbetrieb zu verändern. Auf diese Weise kann zunächst der Pumpenhochlauf optimiert und anschließend eine Veränderung der Lagereigenschaften für den Betrieb im Enddrehzahlbereich vorgenommen werden.

Weiterhin besteht durch den erfindungsgemäßen Aktor die Möglichkeit, einen sogenannten "Robustmode" einzustellen. Hier soll der Schwerpunkt auf einem robusten beziehungsweise störungsarmen Betrieb der Pumpe liegen, was bei Bewegung oder auch beim Belüften der Pumpe vorteilhaft sein kann.

Somit kann erfindungsgemäß sowohl für den Pumpenhochlauf als auch für den Betrieb der Pumpe auf Enddrehzahl oder im Enddrehzahlbereich eine Verbesserung des Schwingungsverhaltens erzielt werden. Ebenso besteht die Möglichkeit der selektiven Anpassung für besondere Einsatzbedingungen der Pumpe. Insgesamt wird hierdurch die Betriebssicherheit erhöht und der Komponentenverschleiß sowie die Geräuschentwicklung verringert.

In vorteilhafter Weise ist das Lager ein mechanisches Lager, das bevorzugt als Wälzlager ausgebildet ist, insbesondere als Kugellager, besonders bevorzugt als Keramikkugellager. Wälzlager sind verhältnismäßig kostengünstig bei einem gleichzeitig hohen Maß an Zuverlässigkeit. Jedoch kann auch ein in axialer und/oder radialer Richtung wirkendes Permanentmagnetlager vorgesehen sein. Ferner kann die Lagereinheit eine Mehrzahl von Lagern aufweisen.

Gemäß einer vorteilhaften Ausgestaltung ist der Aktor derart angeordnet und ausgebildet, dass die Steifigkeit beziehungsweise Vorspannung und/oder Dämpfung des Lagers veränderbar ist. Auf diese Weise lässt sich das Betriebsverhalten der Pumpe, insbesondere des hier in Rede stehenden Lagers, mit nur geringem apparativem Aufwand verändern. Ferner kann der Aktor zur Veränderung der Eigenfrequenz des Lagers bedarfsgerecht angeordnet und ausgebildet sein. Durch eine Veränderung der Eigenfrequenz lassen sich die Eigenschaften der Lagereinheit in vorteilhafter Weise an unterschiedliche Drehzahlbereiche anpassen. Dies kann auch erreicht werden, wenn der Aktor zur Veränderung der Position und/oder Orientierung des Lagers relativ zum Rotor und/oder Stator vorgesehen ist. Das Lager ist dementsprechend relativ zum Rotor und/oder Stator bewegbar, insbesondere verschiebbar, angeordnet.

Gemäß einer bevorzugten Ausführungsform der Vakuumpumpe ist die Betriebseigenschaft und/oder -stellung des Lagers mittels durch den Aktor verarbeiteter und/oder erzeugter mechanischer, elektrischer und/oder magnetischer Größen selektiv veränderbar, wodurch eine präzise Einstellung des Betriebsverhaltens, insbesondere mit einem hohen Maß an Reproduzierbarkeit, sichergestellt werden kann.

Gemäß weiteren Ausführungsformen ist der Aktor ein elektromechanischer, elektro- oder magnetostriktiver, piezoelektrischer, rheologischer, insbesondere elektrorheologischer oder magnetorheologischer, hydraulischer und/oder pneumatischer Aktor. Der Aktor kann eine Formgedächtnislegierung und/oder ein elektroaktives Polymer und/oder ein elektromagnetisches Element und/oder eine elektro-/magnetorheologische Flüssigkeit umfassen. Solche Aktoren sind kostengünstig, zuverlässig und flexibel einsetzbar. Beispielsweise lassen sich elektromechanische, elektro-/magnetostriktive, piezoelektrische, hydraulische und/oder pneumatische Aktoren und/oder Aktoren mit einer Formgedächtnislegierung und/oder einem elektroaktiven Polymer in vorteilhafter Weise für den Einsatz zur Veränderung der Lagersteifigkeit verwenden. Demgegenüber sind elektro-/magnetorheologische Aktoren in geeigneter Weise für die selektive Veränderung der Dämpfung des Lagers verwendbar.

Weiter bevorzugt ist der Aktor stufenlos und/oder abgestuft einstellbar. Durch eine stufenlose oder kontinuierliche Einstellbarkeit wird ein hohes Maß an Flexibilität gewährleistet. Eine abgestufte oder diskrete Einstellbarkeit kann kostengünstig realisiert werden. Bevorzugt ist der Aktor automatisiert einstellbar, insbesondere elektrisch steuerbar und/oder regelbar, wodurch eine handhabungsfreundliche Bedienung der Vakuumpumpe erreicht wird. Insbesondere kann hierdurch eine selbsttätige Einstellung des Aktors an die jeweiligen Betriebsbedingung erfolgen, ohne dass ein Eingreifen des Bedienpersonals erforderlich ist.

Weiter bevorzugt kann der Aktor auch als Sensor genutzt werden. Sowohl der elektrische oder auch der mechanische Zustand des Aktors können bevorzugt durch eine Messung der elektrischen oder mechanischen Eigenschaften ermittelt und damit auf den Zustand des Systems geschlossen werden. Entweder können ungenutzte Teile des Aktors oder der gesamte Aktor kontinuierlich zeitweise als Sensor genutzt werden. Eine Auswerteeinheit wird entweder kontinuierlich oder bedarfsweise, bevorzugt regelmäßig, für kurze Zeitabschnitte mit dem Aktor verbunden; bevorzugt wird der Aktor während seiner Nutzung als Sensor von einer ihm zugeordneten Versorgungseinheit getrennt. Die Auswerteeinheit erfasst entweder rein passiv die elektrischen oder mechanischen Zustände des Systems oder bewertet diese durch Messung von Signalen, die zu diesem Zweck durch die Auswerteeinheit oder die Versorgungseinheit aktiv erzeugt werden. Diese Signale können als diskrete Einzelimpulse oder kontinuierliche, ggf. zeitveränderliche Schwingungen in einem oder mehreren Frequenzbereichen sowohl elektrisch als auch mechanisch erzeugt werden, die bevorzugt den Aktor nicht oder nur unwesentlich in seiner eigentlichen Funktion beeinflussen. Erfolgt eine Umschaltung zwischen Aktor- und Sensorbetriebszustand, so beansprucht der Sensorbetrieb bevorzugt den kleineren absoluten Zeitanteil von weniger dem halben, dritten, vierten, fünften, zehnten, zwanzigsten, fünfzigsten oder hundertsten Teil der Gesamtzeit. Eine (semi)kontinuierliche Nutzung des Aktors als Sensor kann beispielsweise durch eine Analyse der Leistungsaufnahme des Aktors oder durch eine Analyse einer vergleichsweise hochfrequenten Messfrequenz, die einer relativ dazu niedrigeren Nutzfrequenz des Aktors (diese dient zur Aktuierung des Aktors) überlagert ist, erfolgen.

Erfindungsgemäß ist zum Betrieb des Aktors eine Steuer- und/oder Regeleinheit vorgesehen ist. Hierbei kann es sich um eine Steuer- und/oder Regeleinheit handeln, die auch für den Gesamtbetrieb der Vakuumpumpe vorgesehen ist. Ebenso kann die Steuer- und/oder Regeleinheit für den Aktor gesondert vorgesehen sein und bevorzugt mit einer weiteren Steuer- und/oder Regeleinheit für den Gesamtbetrieb der Vakuumpumpe kommunizieren. Die Steuer- und/oder Regeleinheit des Aktors ist gemäß einem ersten Aspekt der Erfindung dazu eingerichtet, den Aktor in Abhängigkeit aktueller Betriebskenngrößen der Vakuumpumpe zu steuern. Hierzu zählen die Pumpleistung, Temperatur, Belüftung und/oder der Zustand des Aktors. Beispielsweise können zusätzlich weitere Betriebsgrößen wie die Rotordrehzahl, Schwingungen und/oder Bewegung des Aktors berücksichtigt werden.

Gemäß einem zweiten Aspekt der Erfindung weist eine Vakuumpumpe, insbesondere Molekularpumpe, mit einem Stator und mit einem drehbar in dem Stator gelagerten Rotor für zumindest eine Pumpstufe zumindest eine zur Lagerung des Rotors vorgesehene Lagereinheit auf. Die Lagereinheit umfasst ein mechanisches Lager und ein magnetisches Lager sowie zumindest einen dem mechanischen Lager zugeordneten Aktor und ein dem magnetischen Lager zugeordnetes Notlager. Wie bei dem ersten Aspekt der Erfindung ist der Aktor zur selektiven Veränderung zumindest einer Betriebseigenschaft und/oder -stellung des mechanischen Lagers angeordnet. Bei dem zweiten Aspekt der Erfindung ist zum Betrieb des Aktors eine Steuer- und/oder Regeleinheit vorgesehen, die dazu eingerichtet ist, den Aktor in Abhängigkeit eines erfassten Notlagerkontakts zu steuern.

Die vorstehend in Zusammenhang mit einer Vakuumpumpe gemäß dem ersten Aspekt der vorliegenden Erfindung beschriebenen optionalen Merkmal und/oder Weiterbildungen lassen sich in analoger Form auch auf eine Vakuumpumpe gemäß dem zweiten Aspekt der vorliegenden Erfindung übertragen.

Bei einem Notlagerkontakt kann es sich um den Kontakt eines Lagers handeln, dass im Normalbetrieb der Vakuumpumpe stillsteht, beziehungsweise nicht in Kontakt mit dem Rotor steht. Eine solche Steuerung des Aktors verringert die Gefahr von Fehlbedienungen, wodurch die Betriebssicherheit der Pumpe weiter verbessert wird.

Gemäß einer weiter bevorzugten Ausführungsform steht der Aktor mit dem Lager in axialer und/oder radialer Wirkverbindung, d. h. der Aktor wirkt in einer radialen und/oder axialen Richtung auf das Lager als Ganzes oder auf eine oder mehrere Komponenten des Lagers. Die Betriebseigenschaften sowie die Betriebsstellung des Lagers lassen sich somit flexibel verändern. Es kann ferner eine Mehrzahl von Aktoren vorgesehen sein, die sämtlich einem einzigen Lager zugeordnet sind. Ebenso ist es möglich, dass ein Aktor oder mehrere Aktoren einer Mehrzahl von Lagern zugeordnet sind und mit diesen jeweils in Wirkverbindung stehen.

In weiter bevorzugter Weise greift der Aktor unmittelbar an dem Lager an (z. B. an einem Außen- und/oder einem Innenring eines Kugellagers), was mit nur geringem Bauraumbedarf zu bewerkstelligen ist. Ebenso kann der Aktor so angeordnet sein, dass dieser mittelbar an dem Lager angreift, so dass zusätzliche Elemente zwischen Aktor und Lager vorgesehen werden können, die beispielsweise zusätzliche Funktionalität bereitstellen können.

Es kann weiter von Vorteil sein, wenn der Aktor in dauerhaftem Kontakt mit dem Lager steht, sodass sich die Betätigung des Aktors ohne Verzögerung auf den Lagerbetrieb auswirkt. Ebenso kann der Aktor in Abhängigkeit von dessen Stellung mit dem Lager in Kontakt bringbar und/oder in ausgeschaltetem Zustand von dem Lager beabstandet angeordnet sein. Dies erlaubt eine vollständige Entkopplung des Aktors von dem Lager, sofern dies für die jeweiligen Betriebsbedingungen von Vorteil ist. Der Aktor kann punktförmig und/oder flächig am Umfang und/oder an einer Stirnseite des Lagers angreifen.

Sofern der Aktor mittelbar an dem Lager angreift, kann zwischen dem Aktor und dem Lager ein Wirkelement angeordnet sein (z.B. ein Dämpfungselement), das bevorzugt eine Elastomer- und/oder Metallstruktur aufweist. Das Wirkelement kann durch den Aktor radial und/oder axial mit mechanischen Kräften beaufschlagbar sein. Durch die Anordnung eines derartigen Wirkelements können bei einer Betätigung des Aktors sowohl die Steifigkeit als auch die Dämpfung des Lagers verändert werden. Dies gilt insbesondere für den Fall eines Wirkelements, das einen Elastomer umfasst. Das Wirkelement kann insbesondere als ein Schwingring oder Reibelement ausgebildet sein.

In bevorzugter Weise steht das Wirkelement in dauerhaftem Kontakt mit dem Lager, so dass sich die Betätigung des Aktors ohne Verzögerung auf das Lager auswirkt. Ebenso kann das Wirkelement in Abhängigkeit von der Stellung des Aktors mit dem Lager in Kontakt bringbar sein und/oder wobei das Wirkelement in ausgeschaltetem Zustand des Aktors von dem Lager beabstandet angeordnet ist. Dies erlaubt eine vollständige Entkopplung des Wirkelements von dem Lager, sofern dies für die jeweiligen Betriebsbedingungen von Vorteil ist. Das Wirkelement kann punktförmig oder flächig am Umfang und/oder an einer Stirnseite des Lagers angreifen.

Gemäß einer weiteren bevorzugten Ausführungsform der Vakuumpumpe kann der Aktor zumindest eine Kammer mit elektro-/magnetorheologischer Flüssigkeit aufweisen, die unmittelbar oder mittelbar mit dem Lager in Wirkverbindung steht. Die Kammer mit rheologischer Flüssigkeit kann insbesondere in radialer Richtung und/oder in axialer Richtung an dem Lager angreifen oder anliegen. Besonders bevorzugt weist der Aktor mehrere Kammern mit elektro-/magnetorheologischer Flüssigkeit auf, die insbesondere gleichmäßig entlang der Umfangsrichtung des Lagers angeordnet sind. Derartige Kammern mit elektro-/magnetorheologischer Flüssigkeit erlauben eine schnelle und sichere Veränderung der Lagerdämpfung durch Erzeugen eines magnetischen oder elektrischen Feldes im Bereich der Kammer(n). Durch das Anlegen eines Feldes verändert sich die Viskosität der jeweiligen Flüssigkeit, wodurch eine reversible Veränderung der Dämpfungseigenschaften realisierbar ist.

Gemäß einer weiteren Ausführungsform ist für die Lagerung des Rotors eine Hybridlagerung vorgesehen, die eine Lageranordnung mit zumindest zwei Lagereinheiten aufweist. Zumindest eine Lagereinheit ist mit einem mechanischen Lager sowie dem Aktor versehen und eine weitere Lagereinheit ist mit einem magnetischen Lager, insbesondere einem Permanentmagnetlager, ausgestattet. Derartige Hybridlagerungen verfügen über lange Wartungsintervalle und Standzeiten und ermöglichen zudem auch eine handhabungsfreundliche Wartung, insbesondere einen einfachen Austausch der jeweiligen mechanischen Lager. Gleichzeitig ermöglichen derartige Hybridlager hohe Drehzahlen und damit eine insgesamt hohe Pumpenleistung der Vakuumpumpe. Vorzugsweise ist die Lagereinheit mit dem mechanischen Lager auf einer Vorvakuumseite und die Lagereinheit mit dem magnetischen Lager auf einer Hochvakuumseite der Pumpe angeordnet.

Eine spezielle Ausführungsform stellt ein Lagerkonzept dar, das zwei Permanentmagnetlager aufweist, die den Rotor radial lagern. Eine diesem Konzept inhärente axiale Instabilität der Lager wird durch zumindest einen Aktor, bevorzugt zwei Aktoren gelöst, die grundsätzlich unabhängig von den Radiallagern direkt oder indirekt in axialer Richtung auf den Rotor wirken. Zwischen Aktor(en) und Rotor können berührungslose oder berührende und in axialer Richtung wirkende Wirkmittel oder Lagermittel, z.B. Permanentmagnete oder keramische Gleitelemente, auf Rotor- und/oder Aktorseite angeordnet sein. Durch eine Betätigung des Aktors (z.B. Auslenkung des Aktors, bei zwei Aktoren kann die Auslenkung koordiniert gleich- oder gegensinnig sein) kann dieser den Rotor axial positionieren und den Rotor in axialer Richtung vorspannen oder entspannen. Temperaturausdehnungen, Betriebslasten und andere Einflüsse auf das System können so wirksam kompensiert und damit der Rotor optimal positioniert und gelagert werden. Bei dieser Ausführungsform findet also eine selektive Änderung zumindest einer Eigenschaft der axialen Lagerung des Rotors statt.

Gemäß einer weiter bevorzugten Ausgestaltung weist eine Lagereinheit mit einem magnetischen Lager ein dem magnetischen Lager zugeordnetes Fanglager auf, das in einem normalen Betriebszustand der Vakuumpumpe nicht in Kontakt mit dem Rotor steht. Das Fanglager bildet eine Art Anschlag, der verhindern soll, dass sich im Falle eines stärkeren Auslenkens des Rotors im Bereich des permanentmagnetisch wirkenden Radiallagers Rotor und Stator berühren. D.h. das Fanglager tritt nur dann in Aktion, wenn das Permanentmagnetlager "überfordert" ist, um Beschädigungen zu verhindern. Der Betrieb des Fanglagers wird hier als Notlagerkontakt bezeichnet und kann, beispielsweise durch geeignete Sensoren, erfasst werden. Wie voranstehend erwähnt, kann der Aktor in Abhängigkeit eines erfassten Notlagerkontakts betrieben werden, um die Betriebseigenschaften und/oder -stellung des mechanischen Lagers zu verändern. Ein unerwünschter Notlagerkontakt kann hierdurch wieder aufgehoben werden.

Nachfolgend wird die vorliegende Erfindung rein beispielhaft anhand einer vorteilhaften Ausführungsform unter Bezugnahme auf die beigefügten Zeichnungen erläutert. Es zeigen:
- Figur 1: eine Schnittdarstellung durch eine herkömmliche Turbomolekularpumpe,
- Figur 2: eine schematische Darstellung durch eine Lagereinheit einer erfindungsgemäßen Turbomolekularpumpe im Längsschnitt,
- Figur 3: eine schematische Darstellung einer Lagereinheit einer weiteren erfindungsgemäßen Turbomolekularpumpe im Längsschnitt,
- Figur 4a: eine schematische Darstellung einer Lagereinheit einer weiteren erfindungsgemäßen Turbomolekularpumpe im Längsschnitt und
- Figur 4b: eine schematische Darstellung der Lagereinheit gemäß Figur 4a in einem Querschnitt.

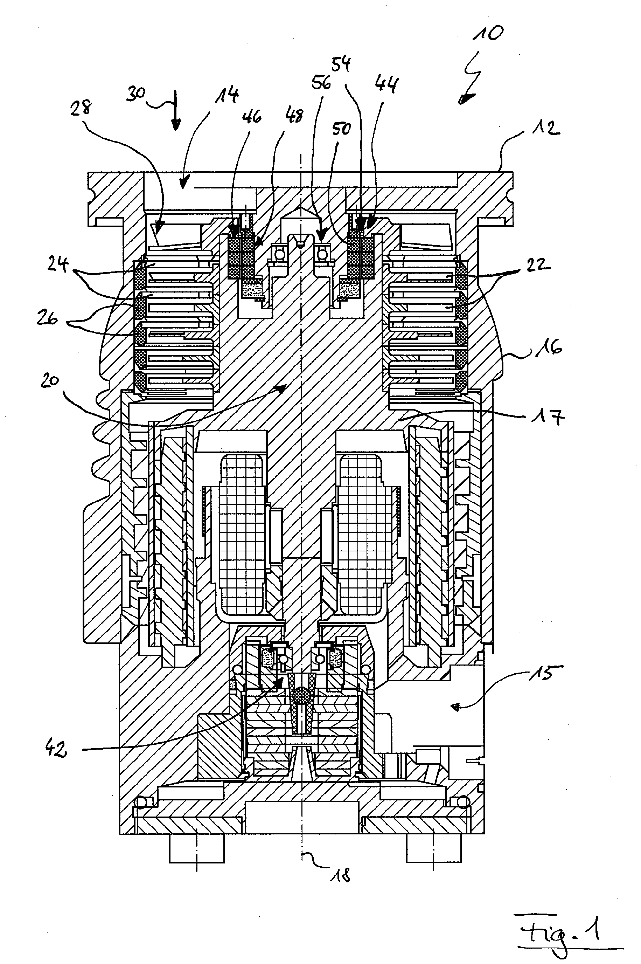

Die in Figur 1 gezeigte herkömmliche Vakuumpumpe 10 umfasst einen von einem Einlassflansch 12 umgebenen Pumpeneinlass 14 sowie mehrere Pumpstufen zur Förderung des an dem Pumpeneinlass 14 anstehenden Gases zu einem Pumpenauslass. Mit dem Bezugszeichen 15 ist ein Bauraum für elektrische Anschlüsse bezeichnet. Die Vakuumpumpe 10 umfasst einen Stator mit einem Gehäuse 16 und einem in dem Gehäuse 16 angeordneten Rotor 17 mit einer um eine Rotationsachse 18 drehbar gelagerten Rotorwelle 20. Die Vakuumpumpe 10 ist als Turbomolekularpumpe ausgebildet und umfasst mehrere pumpwirksam miteinander in Serie geschaltete turbomolekulare Pumpstufen mit mehreren mit der Rotorwelle 20 verbundenen turbomolekularen Rotorscheiben 22 und mehreren in axialer Richtung zwischen den Rotorscheiben 22 angeordneten und in dem Gehäuse 16 festgelegten Statorscheiben 24, die durch Distanzringe 26 in einem gewünschten axialen Abstand zueinander gehalten sind. Die Rotorscheiben 22 und Statorscheiben 24 stellen in einem Schöpfbereich 28 eine in Richtung des Pfeils 30 gerichtete axiale Pumpwirkung bereit.

Die Vakuumpumpe 10 umfasst zudem drei in radialer Richtung hintereinander angeordnete und pumpwirksam miteinander in Serie geschaltete Holweck-Pumpstufen, die an dieser Stelle jedoch nicht eingehender beschrieben werden.

Die drehbare Lagerung der Rotorwelle 20 wird durch ein mechanisches Lager 42 im Bereich des Pumpenauslass und ein Permanentmagnetlager 44 im Bereich des Pumpeneinlasses 14 bewirkt. Die Anordnung aus mechanischem Lager 42 sowie Permanentmagnetlager 44 wird hier als Hybridlagerung bezeichnet.

Das mechanische Lager 42 ist hier als Wälzlager ausgebildet, insbesondere als Kugellager. In besonders bevorzugter Weise handelt es sich bei dem mechanischen Lager 42 um ein Keramikkugellager. Bei der Montage des mechanischen Lagers 42 kann die Lagervorspannung durch geeignete Einstellvorrichtungen festgelegt werden. Die Eigenfrequenz des mechanischen Lagers 42 kann beispielsweise in einem Bereich von 150-400 Hz liegen und wird von der Steifigkeit beziehungsweise Vorspannung des Lagers 42 sowie der Masse des schwingfähigen Systems beeinflusst.

Das Permanentmagnetlager 44 umfasst eine rotorseitige Lagerhälfte 46 und eine statorseitige Lagerhälfte 48, die jeweils einen Ringstapel aus mehreren in axialer Richtung aufeinander gestapelten permanentmagnetischen Ringen 50 umfassen, wobei die Magnetringe 50 unter Ausbildung eines radialen Lagerspalts 54 einander gegenüberliegen. Die Eigenfrequenz des Permanentmagnetlagers 44 kann beispielsweise in einem Bereich von 40-120 Hz liegen.

Beim Hochfahren der Vakuumpumpe werden in der Regel die Eigenfrequenzbereiche der beiden Lager (und Vielfache davon) durchfahren, was zu unerwünschten Resonanzen führen kann. Auch im Bereich der Enddrehzahl oder Betriebsdrehzahl der Pumpe können Eigenfrequenzen angeregt werden. Es können hierdurch starke Schwingungen erzeugt werden, die sich nachteilig auf die Betriebssicherheit der Pumpe auswirken und auch einen erheblichen Materialverschleiß zur Folge haben. Darüber hinaus führt dies zu starker Geräuschbildung.

Unter anderem aus diesem Grund ist dem Permanentmagnetlager 44 ein Not- oder Fanglager 56 zugeordnet, das im normalen Betrieb der Vakuumpumpe 10 den Rotor 17 nicht berührt. Erst bei einer übermäßigen radialen Auslenkung des Rotors 17 gegenüber dem Stator - als Stator ist in diesem Zusammenhang die Gesamtheit der mit dem Gehäuse 16 verbundenen, bei Betrieb der Vakuumpumpe 10 statischen Komponenten zu verstehen - gelangt dieser mit dem Fanglager 56 in Kontakt.

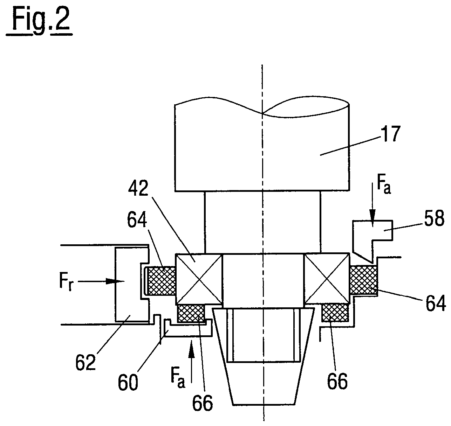

Figur 2 zeigt nun beispielhaft eine erfindungsgemäße Lösung des pumpenauslassseitigen mechanischen Lagers 42 des Rotors 17. Dem mechanischen Lager 42 sind mehrere Aktoren zugeordnet, die hier mit den Bezugszeichen 58, 60 und 62 bezeichnet sind. Jeder der Aktoren 58, 60 und 62 ist zur selektiven Veränderung zumindest einer Betriebseigenschaft und/oder -stellung des Lagers 42 vorgesehen. Bei den Aktoren 58, 60 und 62 kann es sich beispielsweise um elektromechanische, pneumatische oder hydraulische Aktoren handeln oder um Aktoren mit Formgedächtnislegierungen oder elektroaktiven Polymeren. Ebenso können die Aktoren 58, 60 und 62 auch zur Nutzung anderer Wirkprinzipien ausgebildet sein, die eingangs beispielhaft erwähnt wurden.

Die Aktoren 58, 60 und 62 stehen jeweils über ein Wirkelement mit dem Lager 42 in Wirkverbindung. So ist das Lager 42 radial von einem Schwingring 64 eingefasst. Ferner ist axial an einer Stirnseite des Lagers 42 ein weiterer Schwingring 66 angeordnet. Die Schwingringe 64 und 66 bestehen bevorzugt aus Elastomer oder weisen zumindest eine Struktur aus Elastomer auf. Durch eine Kraftbeaufschlagung der Schwingringe 64 und 66 in radialer bzw. axialer Richtung können somit sowohl die Lagervorspannung und damit die Steifigkeit des Lagers als auch die Lagerdämpfung verändert werden. Die von den Aktoren 58, 60 und 62 erzeugte Kraft ist in Figur 2 jeweils mit einem Pfeil sowie der Bezeichnung "Fa" bzw. "Fr" verdeutlicht.

Der Aktor 58 ist zur axialen Kraftbeaufschlagung Fa des Schwingrings 64 vorgesehen. Dabei kann der Aktor 58 ringförmig ausgebildet sein und den Schwingring 64 entlang dessen gesamter Stirnseite flächig kontaktieren. Ebenso kann der Aktor 58 den Schwingring 64 punktuell oder entlang eines Stirnflächenabschnitts kontaktieren. Aufgrund der Kraftbeaufschlagung Fa des Schwingrings 64 durch den Aktor 58 wird der Schwingring 64 elastisch verformt und erhöht somit die radiale Vorspannung des Lagers 42. Gleichzeitig wird durch die Verformung des Schwingrings 64 dessen Dämpfungsverhalten und damit die radiale Lagerdämpfung verändert.

Der Aktor 60 ist zur axialen Kraftbeaufschlagung Fa des Schwingrings 66 vorgesehen. Dabei kann der Aktor 60 ringförmig ausgebildet sein und den Schwingring 66 entlang dessen gesamter Stirnseite flächig kontaktieren. Ebenso kann der Aktor 60 den Schwingring 66 punktuell oder entlang eines Stirnflächenabschnitts kontaktieren. Durch die Kraftbeaufschlagung Fa des Schwingrings 66 durch den Aktor 60 wird der Schwingring 66 elastisch verformt und erhöht somit die axiale Vorspannung des Lagers 42. Gleichzeitig wird durch die Verformung des Schwingrings 66 dessen Dämpfungsverhalten und damit die axiale Lagerdämpfung verändert.

Der Aktor 62 ist zur radialen Kraftbeaufschlagung Fr des Schwingrings 64 vorgesehen. Dabei kann der Aktor 62 ringförmig ausgebildet sein und den Schwingring 64 entlang dessen gesamter Umfangsfläche flächig kontaktieren. Ebenso kann der Aktor 62 den Schwingring 64 punktuell oder entlang eines Umfangsflächenabschnitts kontaktieren. Aufgrund der Kraftbeaufschlagung des Schwingrings 64 durch den Aktor 62 wird der Schwingring 64 elastisch verformt und erhöht somit die radiale Vorspannung des Lagers 42. Gleichzeitig wird durch die Verformung des Schwingrings 64 dessen Dämpfungsverhalten und damit die radiale Lagerdämpfung verändert.

Durch die Aktoren 58, 60 und 62, die auch einzeln oder in beliebigen Kombinationen zum Einsatz gelangen können, kann - so das Lager 42 verschiebbar ist - auch die Betriebsstellung des Lagers 42 verändert werden (z.B. Verschieben in axialer und/oder radialer Richtung und/oder Verschwenken des Lagers 42), insbesondere die Position, Ausrichtung und/oder Orientierung des Lagers 42 relativ zum Rotor 17, zur Rotorwelle 20 und/oder zum Stator 16.

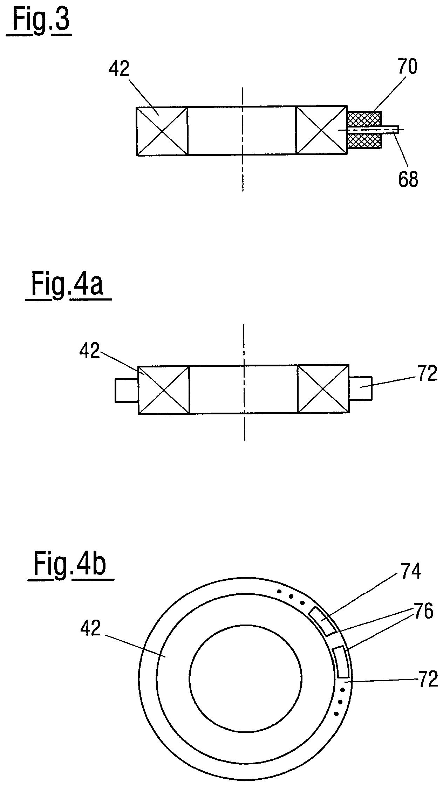

Figur 3 zeigt eine weitere erfindungsgemäße Lösung des pumpenauslassseitigen mechanischen Lagers 42 des Rotors 17. Dem Lager 42 ist ein Aktor 68 sowie ein Schwingring 70 zugeordnet. Der Schwingring 70 steht radial mit dem Lager 42 in Kontakt. Im Gegensatz zu dem Aktor 62 der Fig. 2 greift der Aktor 68 unmittelbar, z. B. an einem Außenring des Lagers 42, an der Lagerumfangsfläche an. Bei einem derartigen direkten Kontakt wirkt sich eine Betätigung des Aktors 68 unmittelbar auf die Vorspannung des Lagers 42 aus, beeinflusst aber kaum die Dämpfungseigenschaften des Rings 70. Es kann ein zusätzlicher Aktor - nicht gezeigt - vorgesehen sein, mit dem die Dämpfungseigenschaften des Rings 70 variiert werden können.

Figuren 4a und 4b zeigen eine weitere erfindungsgemäße Lösung des pumpenauslassseitigen mechanischen Lagers 42 des Rotors 17. Dem Lager 42 ist hier ein Aktor 72 zugeordnet, der eine Mehrzahl von mit elektro- oder magnetorheologischer Flüssigkeit 74 gefüllten Kammern 76 aufweist (beispielhaft nur zwei davon gezeigt), die beispielsweise in ein Elastomer eingebettet sind. Die Kammern 76 sind radial entlang des Außenumfangs des Lagers 42 angeordnet, bevorzugt in regelmäßigen Abständen. Durch Anlegen eines magnetischen beziehungsweise elektrischen Feldes ändert sich die Viskosität der Flüssigkeit 74 in den Kammern 76 und beeinflusst so die mechanischen Eigenschaften des Aktors 72 und damit die Dämpfung des Lagers 42. Die Veränderung der Viskosität ist reversibel, wodurch die Dämpfungseigenschaften des Lagers 42 über den Aktor 72 selektiv veränderbar ist.

Durch die beispielhaft beschriebenen Aktoren 58, 60, 62 und 72 zur selektiven Veränderung zumindest einer Betriebseigenschaft und/oder -stellung des Lagers 42 kann die Vakuumpumpe 10 in vorteilhafter Weise mit nur geringem Aufwand an die jeweils vorherrschenden Betriebsbedingungen angepasst werden. Dies kann insbesondere ohne Austausch von Komponenten oder manuellen Justierarbeiten und daher auch während des Pumpenbetriebs erfolgen. Die Betriebssicherheit der Pumpe, die Standzeiten der Lager sowie auch das Geräuschverhalten lassen sich dadurch verbessern.

### Bezugszeichenliste

- 10: Vakuumpumpe
- 12: Einlassflansch
- 14: Pumpeneinlass
- 15: Bauraum
- 16: Gehäuse
- 17: Rotor
- 18: Rotationsachse
- 20: Rotorwelle
- 22: Rotorscheibe
- 24: Statorscheibe
- 26: Distanzring
- 28: Schöpfbereich
- 30: Pumpwirkung
- 42: Wälzlager
- 44: Permanentmagnetlager
- 46: rotorseitige Lagerhälfte
- 48: statorseitige Lagerhälfte
- 50: permanentmagnetischer Ring
- 54: Lagerspalt
- 56: Fanglager
- 58, 60, 62, 68, 72: Aktor
- 64, 66, 70: Schwingring
- 74: elektro-/magnetorheologische Flüssigkeit
- 76: Kammer
- Fr, Fa: radiale bzw. axiale Kraftbeaufschlagung

## Patentansprüche

1. Vakuumpumpe (10), insbesondere Turbomolekularpumpe, mit einem Stator und mit einem drehbar in dem Stator gelagerten Rotor (17) für zumindest eine Pumpstufe, wobei zur Lagerung des Rotors (17) zumindest eine Lagereinheit vorgesehen ist, die ein Lager (42) sowie zumindest einen dem Lager (42) zugeordneten Aktor (58, 60, 62, 68, 72) aufweist, der zur selektiven Veränderung zumindest einer Betriebseigenschaft und/oder - stellung des Lagers (42) angeordnet ist,
**dadurch gekennzeichnet, dass**
zum Betrieb des Aktors (58, 60, 62, 68, 72) eine Steuer- und/oder Regeleinheit vorgesehen ist, die dazu eingerichtet ist, den Aktor (58, 60, 62, 68, 72) in Abhängigkeit der aktuellen Pumpleistung der Vakuumpumpe, einer aktuellen Temperatur der Vakuumpumpe, einer aktuellen Belüftung der Vakuumpumpe und/oder des aktuellen Zustands des Aktors zu steuern.

2. Vakuumpumpe (10) nach Anspruch 1,
**dadurch gekennzeichnet, dass**
das Lager (42) als mechanisches Lager, insbesondere als Wälzlager ausgebildet ist.

3. Vakuumpumpe (10) nach Anspruch 2,
**dadurch gekennzeichnet, dass**
zur Lagerung des Rotors (17) eine Hybridlagerung vorgesehen ist, die zusätzlich zu dem mechanischen Lager (42) eine weitere Lagereinheit mit zumindest einem magnetischen Lager (44), insbesondere einem Permanentmagnetlager, umfasst.

4. Vakuumpumpe (10), insbesondere Turbomolekularpumpe, mit einem Stator und mit einem drehbar in dem Stator gelagerten Rotor (17) für zumindest eine Pumpstufe, wobei zur Lagerung des Rotors (17) zumindest eine Lagereinheit vorgesehen ist, die ein mechanisches Lager (42) und ein magnetisches Lager (44) sowie zumindest einen dem mechanischen Lager (42) zugeordneten Aktor (58, 60, 62, 68, 72) und ein dem magnetischen Lager zugeordnetes Notlager (56) aufweist, wobei der Aktor zur selektiven Veränderung zumindest einer Betriebseigenschaft und/oder -stellung des mechanischen Lagers (42) angeordnet ist,
**dadurch gekennzeichnet, dass**
zum Betrieb des Aktors (58, 60, 62, 68, 72) eine Steuer- und/oder Regeleinheit vorgesehen ist, die dazu eingerichtet ist, den Aktor (58, 60, 62, 68, 72) in Abhängigkeit eines erfassten Notlagerkontakts zu steuern.

5. Vakuumpumpe (10) nach Anspruch 1, 2, 3 oder 4,
**dadurch gekennzeichnet, dass**
der Aktor (58, 60, 62, 68, 72) derart angeordnet und ausgebildet ist, dass die Steifigkeit und/oder Dämpfung und/oder Eigenfrequenz des Lagers (42) veränderbar ist.

6. Vakuumpumpe (10) nach einem der vorangehenden Ansprüche,
**dadurch gekennzeichnet, dass**
die Betriebseigenschaft und/oder -stellung des Lagers (42) mittels durch den Aktor (58, 60, 62, 68, 72) verarbeiteter elektrischer Größen selektiv veränderbar ist.

7. Vakuumpumpe (10) nach einem der vorangehenden Ansprüche,
**dadurch gekennzeichnet, dass**
der Aktor (58, 60, 62, 68, 72) als elektromechanischer, elektro- oder magnetostriktiver, piezoelektrischer, elektro- oder magnetorheologischer, hydraulischer und/oder pneumatischer Aktor (58, 60, 62, 68, 72) ausgebildet ist.

8. Vakuumpumpe (10) nach einem der vorangehenden Ansprüche,
**dadurch gekennzeichnet, dass**
der Aktor (58, 60, 62, 68, 72) automatisiert einstellbar, insbesondere elektrisch steuerbar und/oder regelbar, ist.

9. Vakuumpumpe (10) nach einem der vorangehenden Ansprüche,
**dadurch gekennzeichnet, dass**
der Aktor (58, 60, 62, 68, 72) kontinuierlich oder zeitweise als Sensor genutzt wird, um Betriebskenngrößen zu ermitteln.

10. Vakuumpumpe (10) nach einem der vorangehenden Ansprüche,
**dadurch gekennzeichnet, dass**
die Steuer- und/oder Regeleinheit, die dazu eingerichtet ist, den Aktor (58, 60, 62, 68, 72) in Abhängigkeit der Rotordrehzahl, und/oder von Schwingungen zu steuern.

11. Vakuumpumpe (10) nach einem der vorangehenden Ansprüche,
**dadurch gekennzeichnet, dass**
der Aktor (58, 60, 62, 68, 72) mit dem Lager (42) in axialer und/oder radialer Wirkverbindung steht und/oder wobei der Aktor (58, 60, 62, 68, 72) unmittelbar oder mittelbar an dem Lager (42) angreift.

12. Vakuumpumpe (10) nach einem der vorangehenden Ansprüche,
**dadurch gekennzeichnet, dass**
der Aktor (58, 60, 62, 68, 72) in dauerhaftem Kontakt mit dem Lager (42) und/oder in Abhängigkeit von der Stellung des Aktors (58, 60, 62, 68, 72) mit dem Lager (42) in Kontakt bringbar ist.

13. Vakuumpumpe (10) nach einem der vorangehenden Ansprüche,
**dadurch gekennzeichnet, dass**
zwischen dem Aktor (58, 60, 62, 68) und dem Lager (42) ein Wirkelement (64, 66, 70) angeordnet ist, das bevorzugt eine Elastomer- und/oder Metallstruktur aufweist, insbesondere wobei das Wirkelement (64, 66, 70) in dauerhaftem Kontakt mit dem Lager (42) und/oder in Abhängigkeit von der Stellung des Aktors (58, 60, 62, 68) mit dem Lager (42) in Kontakt bringbar ist.

14. Vakuumpumpe (10) nach einem der vorangehenden Ansprüche,
**dadurch gekennzeichnet, dass**
der Aktor (72) zumindest eine Kammer (76) mit einer magneto- oder elektrorheologischen Flüssigkeit (74) aufweist, die unmittelbar oder mittelbar mit dem Lager (42) in Wirkverbindung steht, insbesondere in radialer Richtung und/oder in axialer Richtung an dem Lager (42) angreift oder anliegt.

15. Vakuumpumpe (10) nach Anspruch 3 oder 4,
**dadurch gekennzeichnet, dass**
die Lagereinheit mit dem mechanischen Lager (42) auf einer Vorvakuumseite und die Lagereinheit mit dem magnetischen Lager (44) auf einer Hochvakuumseite der Pumpe angeordnet ist.

## Claims

1. A vacuum pump (10), in particular a turbomolecular pump, comprising a stator and a rotor (17) rotatably supported in the stator for at least one pump stage, wherein at least one bearing unit is provided for supporting the rotor (17), said bearing unit having a bearing (42) and at least one actuator (58, 60, 62, 68, 72) which is associated with the bearing (42) and which is arranged to selectively change at least one operating property and/or operating position of the bearing (42),
**characterized in that**
a control and/or regulating unit is provided for operating the actuator (58, 60, 62, 68, 72) and is configured to control the actuator (58, 60, 62, 68, 72) in dependence on the current pumping performance of the vacuum pump, a current temperature of the vacuum pump, a current ventilation of the vacuum pump and/or the current state of the actuator.

2. A vacuum pump (10) according to claim 1,
**characterized in that**
the bearing (42) is configured a mechanical bearing, in particular as a rolling element bearing.

3. A vacuum pump (10) according to claim 2,
**characterized in that**
a hybrid support is provided for supporting the rotor (17) and, in addition to the mechanical bearing (42), comprises a further bearing unit having at least one magnetic bearing (44), in particular a permanent magnet bearing.

4. A vacuum pump (10), in particular a turbomolecular pump, comprising a stator and a rotor (17) rotatably supported in the stator for at least one pump stage, wherein at least one bearing unit is provided for supporting the rotor (17), said bearing unit having a mechanical bearing (42) and a magnetic bearing (44) as well as at least one actuator (58, 60, 62, 68, 72) associated with the mechanical bearing (42) and an emergency bearing (56) associated with the magnetic bearing, wherein the actuator is arranged to selectively change at least one operating property and/or operating position of the mechanical bearing (42),
**characterized in that**
a control and/or regulating unit is provided for operating the actuator (58, 60, 62, 68, 72) and is configured to control the actuator (58, 60, 62, 68, 72) in dependence on a detected emergency bearing contact.

5. A vacuum pump (10) according to claims 1, 2, 3 or 4,
**characterized in that**
the actuator (58, 60, 62, 68, 72) is arranged and configured such that the stiffness and/or damping and/or natural frequency of the bearing (42) can be varied.

6. A vacuum pump (10) according to any one of the preceding claims,
**characterized in that**
the operating property and/or operating position of the bearing (42) can be selectively changed by means of electrical variables processed by the actuator (58, 60, 62, 68, 72).

7. A vacuum pump (10) according to any one of the preceding claims,
**characterized in that**
the actuator (58, 60, 62, 68, 72) is configured as an electromechanical, electrostrictive or magnetostrictive, piezoelectric, electrorheological or magnetorheological, hydraulic and/or pneumatic actuator (58, 60, 62, 68, 72).

8. A vacuum pump (10) according to any one of the preceding claims,
**characterized in that**
the actuator (58, 60, 62, 68, 72) can be set in an automated manner, in particular can be electrically controlled and/or regulated.

9. A vacuum pump (10) according to any one of the preceding claims,
**characterized in that**
the actuator (58, 60, 62, 68, 72) is continuously or temporarily used as a sensor to determine operating parameters.

10. A vacuum pump (10) according to any one of the preceding claims,
**characterized in that**
the control and/or regulating unit is configured to control the actuator (58, 60, 62, 68, 72) in dependence on the rotor rotary speed and/or on oscillations.

11. A vacuum pump (10) according to any one of the preceding claims,
**characterized in that**
the actuator (58, 60, 62, 68, 72) is in an axial and/or radial operative connection with the bearing (42) and/or wherein the actuator (58, 60, 62, 68, 72) engages directly or indirectly at the bearing (42).

12. A vacuum pump (10) according to any one of the preceding claims,
**characterized in that**
the actuator (58, 60, 62, 68, 72) can be brought into permanent contact with the bearing (42) and/or can be brought into contact with the bearing (42) in dependence on the position of the actuator (58, 60, 62, 68, 72).

13. A vacuum pump (10) according to any one of the preceding claims,
**characterized in that**
an active element (64, 66, 70), which preferably has an elastomer structure and/or a metal structure, is arranged between the actuator (58, 60, 62, 68) and the bearing (42), in particular wherein the active element (64, 66, 70) can be brought into permanent contact with the bearing (42) and/or can be brought into contact with the bearing (42) in dependence on the position of the actuator (58, 60, 62, 68).

14. A vacuum pump (10) according to any one of the preceding claims,
**characterized in that**
the actuator (72) has at least one chamber (76) which has a magnetorheological or electrorheological fluid (74) and which is directly or indirectly in operative connection with the bearing (42), in particular engages at or contacts the bearing (42) in the radial direction and/or in the axial direction.

15. A vacuum pump (10) according to claim 3 or 4,
**characterized in that**
the bearing unit having the mechanical bearing (42) is arranged at a fore-vacuum side and the bearing unit having the magnetic bearing (44) is arranged at a high-vacuum side of the pump.

## Revendications

1. Pompe à vide (10), en particulier pompe turbomoléculaire, comprenant un stator et un rotor (17), monté rotatif dans le stator, pour au moins un étage de pompage, au moins une unité de palier étant prévue pour le montage du rotor (17), laquelle présente un palier (42) ainsi qu'au moins un actionneur (58, 60, 62, 68, 72) associé au palier (42) et agencé pour modifier sélectivement au moins une caractéristique et/ou position de fonctionnement du palier (42),
**caractérisée en ce que**
pour le fonctionnement de l'actionneur (58, 60, 62, 68, 72), il est prévu une unité de commande et/ou de régulation conçue pour commander l'actionneur (58, 60, 62, 68, 72) en fonction de la puissance de pompage actuelle de la pompe à vide, d'une température actuelle de la pompe à vide, d'une ventilation actuelle de la pompe à vide et/ou de l'état actuel de l'actionneur.

2. Pompe à vide (10) selon la revendication 1,
**caractérisée en ce que**
le palier (42) est conçu comme un palier mécanique, en particulier comme un palier à roulement.

3. Pompe à vide (10) selon la revendication 2,
**caractérisée en ce que**
pour monter le rotor (17), il est prévu un montage hybride qui comprend, en plus du palier mécanique (42), une autre unité de palier avec au moins un palier magnétique (44), en particulier un palier à aimants permanents.

4. Pompe à vide (10), en particulier pompe turbomoléculaire, comprenant un stator et un rotor (17), monté rotatif dans le stator, pour au moins un étage de pompage, au moins une unité de palier étant prévue pour le montage du rotor (17), laquelle présente un palier mécanique (42) et un palier magnétique (44) ainsi qu'au moins un actionneur (58, 60, 62, 68, 72), associé au palier mécanique (42), et un palier de secours (56) associé au palier magnétique, ledit actionneur étant agencé pour modifier sélectivement au moins une caractéristique et/ou position de fonctionnement du palier mécanique (42),
**caractérisée en ce que**
pour le fonctionnement de l'actionneur (58, 60, 62, 68, 72), il est prévu une unité de commande et/ou de régulation conçue pour commander l'actionneur (58, 60, 62, 68, 72) en fonction d'un contact détecté du palier de secours.

5. Pompe à vide (10) selon la revendication 1, 2, 3 ou 4,
**caractérisée en ce que**
l'actionneur (58, 60, 62, 68, 72) est agencé et conçu de manière à pouvoir modifier la rigidité et/ou l'amortissement et/ou la fréquence propre du palier (42).

6. Pompe à vide (10) selon l'une des revendications précédentes,
**caractérisée en ce que**
la caractéristique et/ou la position de fonctionnement du palier (42) peut être modifiée sélectivement au moyen de grandeurs électriques traitées par l'actionneur (58, 60, 62, 68, 72).

7. Pompe à vide (10) selon l'une des revendications précédentes,
**caractérisée en ce que**
l'actionneur (58, 60, 62, 68, 72) est conçu comme un actionneur (58, 60, 62, 68, 72) électromécanique, électro- ou magnétostrictif, piézoélectrique, électro- ou magnétorhéologique, hydraulique et/ou pneumatique.

8. Pompe à vide (10) selon l'une des revendications précédentes,
**caractérisée en ce que**
l'actionneur (58, 60, 62, 68, 72) peut être réglé de manière automatisée, en particulier être commandé et/ou régulé par voie électrique.

9. Pompe à vide (10) selon l'une des revendications précédentes,
**caractérisée en ce que**
l'actionneur (58, 60, 62, 68, 72) est utilisé en continu ou temporairement comme capteur afin de détecter des grandeurs caractéristiques de fonctionnement.

10. Pompe à vide (10) selon l'une des revendications précédentes,
**caractérisée en ce que**
l'unité de commande et/ou de régulation est conçue pour commander l'actionneur (58, 60, 62, 68, 72) en fonction de la vitesse de rotation du rotor et/ou en fonction des vibrations.

11. Pompe à vide (10) selon l'une des revendications précédentes,
**caractérisée en ce que**
l'actionneur (58, 60, 62, 68, 72) est en liaison active axiale et/ou radiale avec le palier (42), et/ou l'actionneur (58, 60, 62, 68, 72) agit directement ou indirectement sur le palier (42).

12. Pompe à vide (10) selon l'une des revendications précédentes,
**caractérisée en ce que**
l'actionneur (58, 60, 62, 68, 72) peut être en contact permanent avec le palier (42) et/ou peut être amené en contact avec le palier (42) en fonction de la position de l'actionneur (58, 60, 62, 68, 72).

13. Pompe à vide (10) selon l'une des revendications précédentes,
**caractérisée en ce que**
un élément actif (64, 66, 70) est disposé entre l'actionneur (58, 60, 62, 68) et le palier (42), lequel présente de préférence une structure élastomère et/ou métallique, en particulier l'élément actif (64, 66, 70) pouvant être en contact permanent avec le palier (42) et/ou pouvant être amené en contact avec le palier (42) en fonction de la position de l'actionneur (58, 60, 62, 68).

14. Pompe à vide (10) selon l'une des revendications précédentes,
**caractérisée en ce que**
l'actionneur (72) comprend au moins une chambre (76), contenant un liquide magnéto- ou électrorhéologique (74), qui est directement ou indirectement en liaison active avec le palier (42) et qui, en particulier, agit ou s'appuie sur le palier (42) en direction radiale et/ou en direction axiale.

15. Pompe à vide (10) selon la revendication 3 ou 4,
**caractérisée en ce que**
l'unité de palier avec le palier mécanique (42) est disposée sur un côté de vide préliminaire, et l'unité de palier avec le palier magnétique (44) est disposée sur un côté de vide poussé de la pompe.
